Europäisches Patentamt

European Patent Office

Office européen des brevets

(11) Publication number: **0 116 767**
**B1**

(19)

# EUROPEAN PATENT SPECIFICATION

(12)

(45) Date of publication of patent specification: **07.09.88**

(21) Application number: **83307671.4**

(22) Date of filing: **16.12.83**

(51) Int. Cl.⁴: **H 04 M 19/00, H 04 Q 3/00**

(54) Battery feed circuit for a telephone subscriber line.

(30) Priority: **30.12.82 JP 233825/82**

(43) Date of publication of application:
**29.08.84 Bulletin 84/35**

(45) Publication of the grant of the patent:
**07.09.88 Bulletin 88/36**

(84) Designated Contracting States:
**DE FR GB SE**

(56) References cited:
**EP-A-0 057 009**
**GB-A-2 050 116**
**GB-A-2 102 249**
**US-A-4 007 335**

(73) Proprietor: **FUJITSU LIMITED**
**1015, Kamikodanaka Nakahara-ku**
**Kawasaki-shi Kanagawa 211 (JP)**

(72) Inventor: **Ayano, Mitsutoshi c/o FUJITSU LIMITED**
**Patent department 1015 Kamikodanaka**
**Nakahara-ku**
**Kawasaki-shi Kanagawa 211 (JP)**
Inventor: **Shibuya, Kiyoshi c/o FUJITSU LIMITED**
**Patent department 1015 Kamikodanaka**
**Nakahara-ku**
**Kawasaki-shi Kanagawa 211 (JP)**
Inventor: **Itou, Shin-ichi c/o FUJITSU LIMITED**
**Patent department 1015 Kamikodanaka**
**Nakahara-ku**
**Kawasaki-shi Kanagawa 211 (JP)**
Inventor: **Takatou, Kenji c/o FUJITSU LIMITED**
**Patent department 1015 Kamikodanaka**
**Nakahara-ku**
**Kawasaki-shi Kanagawa 211 (JP)**
Inventor: **Tojo, Toshiro c/o FUJITSU LIMITED**
**Patent department 1015 Kamikodanaka**
**Nakahara-ku**
**Kawasaki-shi Kanagawa 211 (JP)**

Courier Press, Leamington Spa, England.

**0 116 767**

74 Representative: **Sunderland, James Harry et al
HASELTINE LAKE & CO Hazlitt House 28
Southampton Buildings Chancery Lane
London WC2A 1AT (GB)**

## Description

This invention relates to a telephone subscriber line circuit and, more particularly, to a battery feed circuit for a telephone subscriber line circuit in a digital telephone electronic switching system.

A battery feed circuit in a telephone switching system is used to supply a direct current from a battery power supply to a two-wire subscriber line loop, which transmits voice signals to/from a telephone transmitter/receiver.

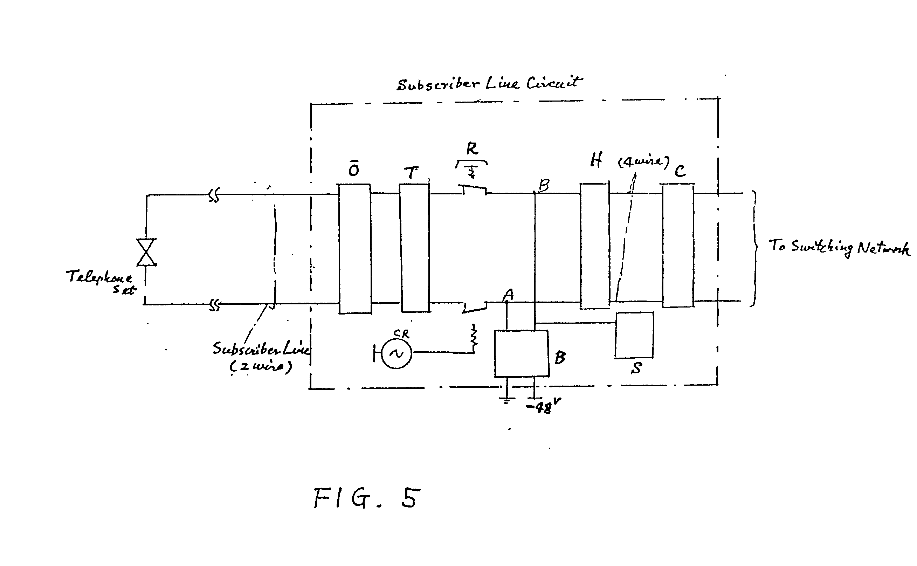

In a digital telephone switching system, a subscriber line circuit settled between a subscriber line and a switching network has "BORSCHT" functions and a battery feed circuit is provided in each subscriber line circuit together with other circuits for achieving the "BORSCHT" (Battery power feed to subscriber line (B), Overvoltage protection from subscriber line (Ō), Ringing to telephone set (R), Supervision of status of line loop (S), Coder and decoder of telephone signal (C), Hybrid circuit to convert between 2 wire and 4 wire (H), and Testing (T)) functions, as shown in Fig. 5 of the accompanying drawings which is a schematic block diagram of a subscriber line circuit.

The total number of battery feed circuits needed in a system is equal to the number of subscriber lines. In a large capacity digital system accommodating many subscriber lines, therefore, battery feed circuits of small size and low power consumption are essential to provide for the design of compact subscriber line equipment.

A constant current feed circuit and a floating battery feed circuit are examples of battery feed circuits of low power consumption.

However, the former circuit suffers problems such as production of excessive heat loss in the circuit and also loss of AGC (Auto Gain Control) function of a telephone transmitter circuit in a telephone set.

The latter circuit suffers problems such as relatively large bulk, because a large transformer is used in a power supply circuit, and degradation of AGC function of a telephone circuit because of power feed characteristics differing from the characteristics of a constant resistance power feed.

A constant resistance power feed, which has been employed since the earlier type of analog telephone system was used, is to be preferred with regard to the AGC function of a telephone set and also for protection of the power feed circuit from large currents accidentally occurring on a subscriber line.

There are two types of constant resistance power feed circuit:— a transformer circuit type and an electronic circuit type and an electronic circuit type.

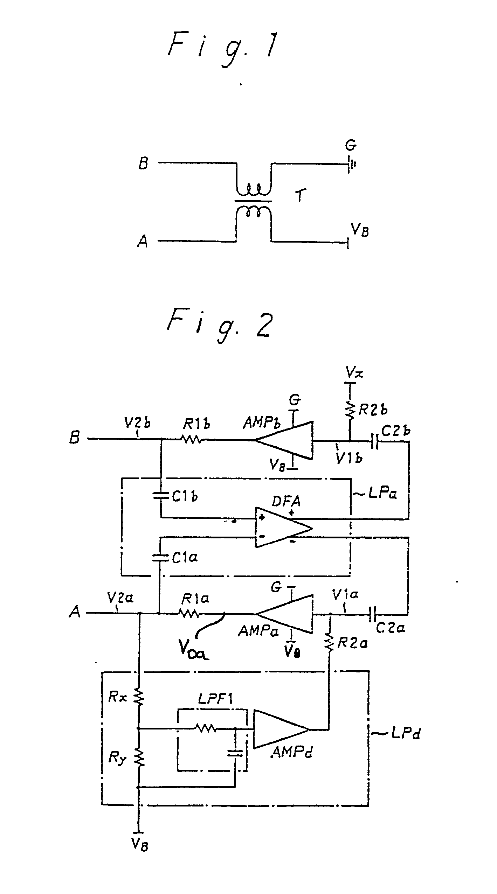

A previous transformer circuit is shown in Fig. 1 of the accompanying drawings, which is a schematic circuit diagram. The circuit consists of one large transformer T with two windings, one of which is connected to a first wire (wire A) of a subscriber line and to a battery negative terminal

$V_B$, the other being connected to a second wire (wire B) of the subscriber line and to the positive ground terminal G of the battery.

The battery power feed circuit is required to have a high impedance to an AC (Alternating Current) transversal signal, and a constant impedance to DC voltage. A low impedance for an AC longitudinal signal is also required.

In a transformer circuit, a high impedance to an AC transversal signal is easily realised by providing that the inductance L involved has a large value, because this AC impedance is given by $2\pi fL$. The DC impedance of the transformer is the resistance of the windings.

Therefore, it is easy to obtain a desired DC resistance for the transformer. A small value of longitudinal AC impedance is realised by choosing the directions of the two windings such that their magnetic fluxes cancel each other. AC longitudinal impedance looking from wire A and wire B towards the transformer, therefore, is then equal to sum of the DC resistances of the windings.

Thus, the transformer circuit of Fig. 1 fulfills all the above-mentioned impedance requirements for a battery power feed circuit. However, miniaturisation of the transformer poses a major problem.

An example of a previous electronic type power feed circuit is shown in Fig. 2 of the accompanying drawings, which is a schematic block circuit diagram. The circuit has a 1st operational amplifier AMPa, a 2nd operational amplifier AMPb, 1st and 2nd output resistors R1a, R1b, an AC signal feedback loop LPa, and a DC voltage feedback loop LPd. The feedback loops LPa and LPd are surrounded by respective chain line rectangles in Fig. 2.

The AC feedback loop LPa comprises a differential amplifier DFA, and coupling capacitors C1a and C1b.

The DC feedback loop LPd comprises resistors Rx and Ry, a first low-pass filter LPF1, and a 3rd operational amplifier AMPd.

In Fig. 2 Vx and $V_B$ are respective power supply voltages, and G is ground.

AMPa, AMPb and AMPd are so-called voltage follower operational amplifiers; that is, the output terminal of each operational amplifier is directly connected to its negative input terminal (−). It has characteristics of unity voltage gain, non-polarity converting (inversion), extremely high input impedance, and extremely low output impedance.

Wires A (ring) and B (tip) form a two wire subscriber line, to which direct current is supplied by the battery feed circuit. AMPa and AMPb each have unity voltage gain, and they supply output voltages, V1a and V1b, equal to their input voltages, to wire A and wire B, through resistors R1a and R1b, respectively.

The direct current (DC) path for the subscriber loop is made up of the following serially connected elements:

positive grounded terminal of a battery (not shown),

3

positive power supply terminal G of AMPb,
output terminal of AMPb,
2nd output resistor R1b,
connection point to the second wire B of the subscriber line,
second wire B of the subscriber line (not shown),
a telephone transmitter/receiver set (not shown),
first wire A of the subscriber line (not shown),
connection point to the first wire A of the subscriber line,
first output resistor R1a,
output terminal of AMPa,
negative power supply terminal of AMPa, and
negative terminal $V_B$ of a battery (not shown).

The operational principle of an AC feedback loop using a differential amplifier circuit has been disclosed in U.S. Patent No. 4,007,335.

On wire A and wire B, telephone signals V2a, V2b (AC signals) are superimposed on DC voltage. These AC components V2a, V2b are coupled to the differential amplifier DFA through capacitors C1a and C1b. The differential amplifier DFA provides the following two signal outputs:—

$$Va = -(V2b-V2a)/2$$
$$Vb = (V2b-V2a)/2$$

The output signals Va and Vb are supplied to AMPa and AMPb, through capacitors C2a and C2b, respectively.

Resistances of resistors R2a and R2b, and the capacitances of capacitors C2a and C2b are determined as follows:—

$$2\pi f\ C2a\ R2a \gg 1$$
$$2\pi f\ C2b\ R2b \gg 1$$

AC components of V1a and V1b (the input signals) supplied to AMPa and AMPb (derived from the AC feedback loop LPa) are respectively as follows:—

$$V1a(a) = -(V2b-V2a)/2,$$
$$V1b(a) = (V2b-V2a)/2,$$

A telephone signal is transmitted in balanced mode on the subscriber line, to be discriminated from induced noise, so V2b=−V2a.

The AC components of the output voltages of AMPa and AMPb are, therefore, V2a and V2b, respectively.

The AC output impedances Za(a) and Zb(a) of AMPa and AMPb, looking from wire A and wire B are, therefore:—

$$Za(a) = V2a \div (V2a-V2a)/R1a = \infty$$
$$Zb(a) = V2b \div (V2b-V2b)/R1b = \infty$$

A fixed bias voltage Vx is applied to AMPb at its input terminal through a high resistance provided by resistor R2b. The value of the bias voltage Vx is determined to be larger than the sum of the saturation voltage of AMPb and the AC signal voltage supplied to the input terminal of AMPb.

As AMPb is a unity voltage gain operational amplifier and has no DC voltage feedback loop, it provides the same amplitude of DC voltage at its output, having an extremely low output DC impedance. That is, AMPb can be considered as a DC voltage source, giving a constant (DC) voltage Vx and zero impedance.

Since AMPa is connected to the DC voltage feedback loop LPd, the output DC voltage of AMPa varies with the output voltage of the DC feedback loop LPd. The input of the DC loop LPd is connected to first wire A of the subscriber line.

Resistors Ry and Rx in the feedback loop LPd pick up the line voltage V2a (considering V2a now as including DC and AC components) and supply a divided voltage V2a Ry/(Rx+Ry) to the low-pass filter LPF1, which eliminates AC components from the divided voltage and which supplies only the DC component of the divided voltage V2a Ry/(Rx+Ry)dc to AMPd.

As AMPd is a voltage follower, it provides an output of the same amplitude and polarity as the input DC voltage transmitted from the LPF1. The DC output voltage of AMPd is supplied to AMPa, which provides an output of the same voltage and same polarity.

Now, the output voltage Voa of AMPa is as follows,

$$Voa = V1a = [V2a \cdot Ry/(Rx+Ry)]\ dc.$$

The DC impedance Za(d) looking from the wire A towards AMPa is given by:—

$$\begin{aligned} Za(d) &= V2a \div (V2a-Voa)/R1a \\ &= V2a \div (V2a-V1a)/R1a \\ &= V2a \div (V2a-V2aRy/(Rx+Ry))/R1a \\ &= R1a/(1-Ry/Rx+Ry) \\ &= R1a(1+Ry/Rx) \end{aligned}$$

(where voltages are DC voltages).

The DC impedance Zb(d) looking from the wire B towards AMPb is R1b.

$$Zb(d) = R1b$$

Therefore, a total DC impedance Zdc of the battery feed circuit is:—

$$Zdc = R1b + R1a(1+Ry/Rx)$$

In conclusion, The AC impedance for a telephone signal is infinite and the DC impedance for DC voltage can be set to a specified value by suitably chosing values of resistance.

The AC impedance of the battery feed circuit for a longitudinal signal can also be low, because a longitudinal signal, such as 60 Hz power line induction signal, is removed by differential amplifier DFA and lowpass filter LPF1. Longitudinal impedance looking from the two wires A and B will be R1a+R1b. The values of resistors R1a and R1b are selected to be small value to reduce heat loss in the resistors.

In the battery feed circuit of Fig. 2, DC total impedance Zdc is as described above:—

$$Zdc = R1b + R1a(1 + Ry/Rx)$$

and Zdc is usually set to 400 $\Omega$ or 440 $\Omega$.

In order to reduce the DC power consumption of the circuit, therefore, it is necessary to select small values for the output resistors R1a and R1b, and a large ratio between the resistors Rx and Ry.

The output (DC) voltage of AMPb is a fixed voltage Vx, and so power consumption of AMPb can be reduced by selecting a small voltage of Vx. The output (DC) voltage of AMPa is I.R1a(Ry/Rx), where I is a DC current of the loop. The DC current I of the loop is obtained as follows:—

$$I = (V_B - Vx)/(R_L + R1b + R1a(1 + Ry/Rx)),$$

where $R_L$ is load resistance of the subscriber line loop, which includes a resistance R1 of a two-wire subscriber line and a resistance Rt of a telephone set.

The resistance R1 varies with length of the line, from 0 to about 2000 $\Omega$, and the resistance Rt of a telephone set is about 100 $\Omega$. Therefore, load resistance $R_L$ ranges from 100 $\Omega$ to 2100 $\Omega$ when the telephone set is in an off-hook status. Needless to say, in an on-hook status, load resistance $R_L$ is infinite and current I is zero.

When the length of the line is very small, that is, when resistance R1 is negligibly small, then the resistance $R_L$ is 100 $\Omega$. The power supply $V_B$ is usually −48 volt, and the bias voltage Vx is set to about 3 volt, and the loop current I will be at maximum:—

$$I_{max} = (48-3)^V/(100+400)^\Omega = 90 \text{ ma}$$

The total power loss of the circuit carrying a current $I_{max}$ of 90 ma is:—

$$(90 \times 10^{-3})^2 \times 400 = 3.24 \text{ w}$$

When the sum of output resistor resistances (R1a+R1b) is set to 100 $\Omega$, the power loss in AMPa will be 3.24 w$\times$3/4=2.43 w. A power loss of 2.43 w in AMPa is too large for the power feed circuit to be made using Integrated Circuit technology.

The electronic circuit of Fig. 2 can be of smaller size (than a transformer circuit as shown in Fig. 1) but power consumption of the circuit is still a problem.

It will be understood from the above that the battery feed circuit of Fig. 2 through its operation (see in particular AMPa) provides DC impedance active converter means which offer a specified value of DC impedance to the subscriber line (see Za(a), Zb(d) and Zd(c) and which provide a variable DC output voltage (the output voltage of AMPa depending upon the DC current I in the loop, which depends upon the line length and the telephone set being in the on-hook or off-hook condition).

GB—A—2 050 116 discloses a telephone line circuit in which, for a subscriber line, responsive line driver stages are connected to a and b wires, each line driver comprising an amplifier the output impedance of which is determined by feedback and by using a controlled supply source as the supply source for the amplifiers.

EP—A—0 057 009 discloses a current supply circuit for a subscriber circuit. The current supply circuit has a DC—DC converter the output voltage of which is controlled in dependence upon the sum of a voltage proportional to load current on the subscriber line circuit and a voltage proportional to the output voltage of the DC—DC converter.

According to the present invention there is provided a battery feed circuit, for supplying DC current to a two-wire subscriber line, including:

first and second amplifiers, respectively connected to first and second wires of the subscriber line, operable to provide the first wire and the second wire with DC voltage;

first and second output resistors, respectively connected between the outputs of the first and second amplifiers and the first and second wires, providing those amplifiers with respective output impedances for the respective wires; and

a DC voltage feedback loop, having an input connected to at least the said first wire, operable to provide a DC output voltage proportional to the DC voltage on the said first wire and to feed that output voltage back to the first amplifier;

characterised in that the battery feed circuit further includes:

a switching power supply operable to compare a power source voltage of the first amplifier with the output voltage of the DC voltage feedback loop, and to control the said power source voltage to be less than the output voltage of the DC voltage feedback loop, the switching power supply comprising:

a zener diode, connected to an output terminal of the DC voltage feedback loop, operable to provide a DC reference voltage based upon the output voltage of the DC voltage feedback loop;

a reference wave signal generator, generating a reference wave signal;

first comparator means, operable to compare the voltage of the said power source voltage input terminal of the first amplifier with the DC reference voltage, and to provide high voltage output or a low voltage output in dependence upon which of the compared voltages is higher;

second comparator means, operable to compare said high voltage or said low voltage output from the first comparator means, with the reference wave signal, and to provide a rectangular wave signal, the waveform of which depends upon the results of such comparison; and

switching transistor circuit means comprising a transistor, a capacitor, and first and second resistors, operable to provide a DC voltage by on/off switching of the collector current of the transistor in accordance with the rectangular wave signal, supplied through the first resistor to the transistor, the capacitor having a discharge path through the second resistor and the transistor, when the transistor is on, and a charge path including the first and second amplifier when the transistor is off.

An embodiment of the present invention can provide a battery feed circuit of small size, and low power consumption for a digital telephone electronic switching system.

Such a battery feed circuit is suitable for fabrication using integrated circuit (IC) technology.

Briefly, embodiments of the present invention take into account the following considerations. Loss can be separated between loss in amplifiers and loss in output resistors. Loss in output resistors is reduced by using small resistances. The loss in AMPb is reduced by selecting a small DC bias voltage (Vx) for AMPb. These reductions having been achieved, loss is concentrated in AMPa. Loss in AMPa is reduced by reducing its source (supply) voltage to a level lower than its output voltage corresponding to load resistance of subscriber line.

This is accomplished by adding a further feedback loop including a voltage regulator, which varies output voltage by means of zener diode, comparators and a switching transistor circuit.

Reference is made, by way of example, to the accompanying drawings, in which:—

Fig. 1 is a schematic circuit diagram of a previous transformer battery feed circuit;

Fig. 2 is a schematic block circuit diagram of a previous electronic battery feed circuit;

Fig. 3 is a schematic block circuit diagram of a battery feed circuit embodying the present invention;

Fig. 4 is a waveform diagram illustrating waveforms (a) to (c) for assistance in explanation of operation of the circuit of Fig. 3; and

Fig. 5 is a schematic block diagram illustrating a subscriber line circuit.

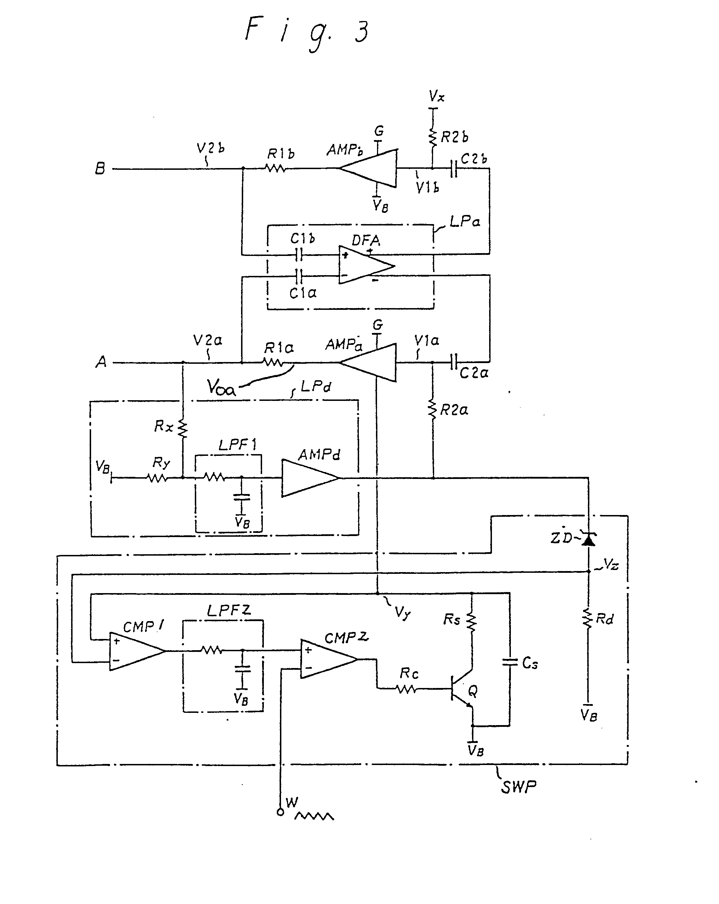

As can be seen from the schematic circuit diagram, the battery feed circuit embodying the present invention shown in Fig. 3, as compared with the circuit of Fig. 2, additionally includes a switching regulator circuit SWP, shown surrounded by a chain line rectangle in Fig. 3.

The switching regulator SWP comprises a zener diode ZD, a 1st comparator CMP1, a 2nd comparator CMP2, a 2nd low-pass filter LPF2, and a switching transistor circuit.

The zener diode provides a DC reference voltage to the 1st comparator. The cathode of the zener diode ZD is connected to the output of AMPd, and the anode of the zener diode ZD is connected to battery terminal $V_B$ through a resistor Rd. The anode voltage Vz of zener diode ZD is kept always lower than its cathode voltage by a definite amount, a zener voltage Vzd.

The anode voltage Vz is applied to the input terminal (−) of comparator CMP1. The positive input terminal (+) of the comparator CMP1 is connected to one of the power supply terminals of AMPa, and is supplied with the output voltage Vy of the switching voltage regulator SWP.

In CMP1, the voltage Vy is compared with the voltage Vz. CMP1 provides a low and high voltages V(b) and V(c). The voltage, V(b) or V(c), provided is determined in accordance with Vy being higher than the voltage Vz, or voltage Vy being lower than the voltage Vz. These DC voltages V(b) and V(c) are nearly equal to positive and negative power supply voltages of the comparator CMP1.

The DC voltage output from CMP1, V(b) or V(c), is filtered by 2nd low-pass filter LPF2 to eliminate any remaining AC components. Then it is applied to the positive input terminal (+) of CMP2, and compared with a reference wave signal W supplied to the other (negative) input terminal (−) of CMP2.

The reference wave signal W is a triangular wave or a saw-tooth wave signal. The comparator CMP2 provides a rectangular wave output, switching between a high level $V_h$ and a low level $V_1$.

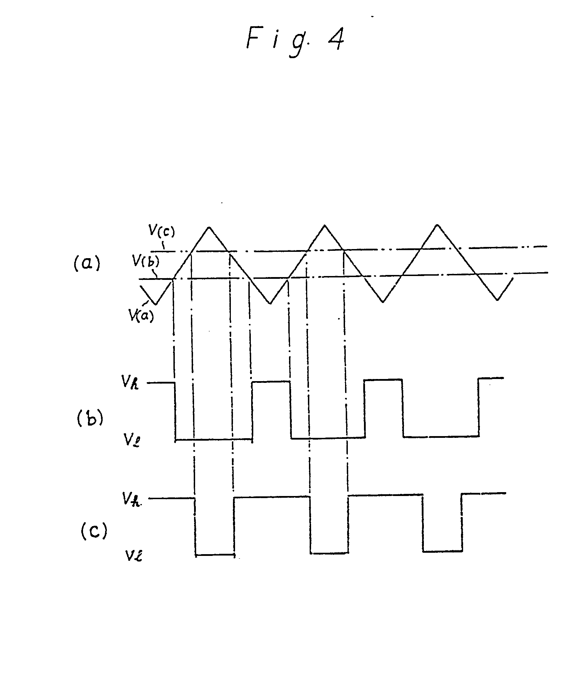

Fig. 4(a) illustrates the waveform of a reference signal W having a triangular waveform.

When the input voltage to the input terminal (+) of comparator CMP2 is the (low) voltage V(b), the output of CMP2 is a rectangular wave as shown in Fig. 4(b), which takes low level $V_1$ for periods longer than it takes high level $V_h$.

When the input voltage to terminal (+) changes to (high) voltage V(c), the output of CMP2 changes to a rectangular wave as shown in Fig. 4(c), which takes low level $V_1$ for periods shorter than it takes high level $V_h$.

The rectangular wave output from CMP2 is applied to the switching transistor circuit. In the switching transistor circuit, the rectangular wave signal is supplied to the base of an npn transistor Q through a resistor Rc. When the rectangular wave input is high level $V_h$, transistor Q conducts collector current. When the rectangular wave input is low level $V_1$, the collector current is cut off.

In the transistor circuit, a resistor Rs is connected in the collector circuit between collector electrode of transistor Q and the output terminal of the switching regulator circuit SWP. A capacitor Cs is connected between the emitter electrode of transistor Q and the output terminal of SWP, and the emitter electrode is connected to the battery negative terminal $V_B$.

When transistor Q is cut off, that is, when the rectangular wave input is low level $V_1$, the capacitor Cs is charged by a DC path through battery G (ground), AMPb, resistor R1b, subscriber line loop, resistor R1a, AMPa, capacitor Cs, and battery $V_B$ (negative terminal). Total DC resistance of the path is Zdc.

When transistor Q is on (conductive), that is, when rectangular wave input is high level $V_h$, charge held in the capacitor Cs is discharged by a DC path through resistor Rs, the collector electrode of transistor Q, its emitter electrode and battery terminal $V_B$.

When the capacitor Cs is discharged, the output voltage Vy decreases. On the other hand, when the capacitor Cs is charged, the output voltage Vy increases.

The change of output voltage Vy is fed back to the input of first comparator CMP1. This feedback loop is operated so as to reduce the difference voltage Vy—Vz. The operation of loop circuit is then repeated in accordance with the input rectangular pulse train, and a definite voltage Vy equal to the voltage Vz is established as an output voltage of the switching regulator SWP.

Since the cathode of zener diode ZD is connected to the output terminal of AMPd, and the output terminal of AMPd is connected to the input of AMPa via the high resistance of resistor R2a, the input voltage V1a of AMPa is equal to the cathode voltage of zener diode Zd.

Moreover, as the AMPa has unity voltage gain, the output voltage Voa of AMPa is equal to the input voltage V1a of AMPa. As a result, the output voltage Voa of AMPa is higher than the voltage Vz by the definite (zener) voltage Vzd. On the other hand, the voltage Vy, the output voltage of switching regulator SWP, is applied to AMPa as its power supply voltage. So, the power supply voltage of AMPa is kept lower, by a definite voltage Vzd, than output voltage Voa of AMPa.

$$Vy-Voa=Vzd$$

This relationship holds even if the voltage V1a varies due to a change of the load resistance $R_L$ of the subscriber line loop.

It will be understood that the battery feed circuit of Fig. 3 provides DC active impedance converter means as mentioned in connection with Fig. 2.

Moreover, in the battery feed circuit of Fig. 3, switching power supply means are afforded which deliver a variable DC voltage to a power source terminal of the converter means (see particularly AMPa) in dependence upon the length of the subscriber line and the state (on-hook or off-hook) of the telephone set.

AMPd is a voltage follower which provides a DC output voltage the same as its DC input voltage. This input voltage depends upon the DC voltage delivered to wire A of the subscriber line from AMPa, which in turn depends upon the load resistance $R_L$ of the subscriber line (which is determined by the length of the line and its state; on-hook or off-hook). Thus, the DC power supply voltage supplied to AMPa by the switching regulator SWP depends upon the length of the subscriber line and the state (on-hook or off-hook) of the telephone set.

These means provide for reduced power consumption in the battery feed circuit.

It will be understood that the major power loss of the circuit of Fig. 3 occurs at the 1st operational amplifier AMPa. The internal power loss of AMPa is expressed as,

$$I \cdot (Vy-Voa)=I \cdot Vzd,$$

In the circuit of Fig. 3, the zener voltage Vzd is selected to be small, in order to reduce the power consumption. A zener voltage Vzd of about 3 volts for example may be selected.

When length of subscriber line is very short, as mentioned above in connection with Fig. 2, the DC current I of the line loop is 90 ma. The output resistors R1a, R1b are selected to have small resistances, in a range within which phase difference for AC signals between inputs and outputs of those resistors is negligibly small. For example R1a+R1b=100 Ω is adopted.

The DC bias Vx to the AMPb is selected to be equal to the sum of the saturation voltage of AMPb and the AC voltage from the AC feedback loop LPa, for example 3 volt.

Under these conditions, the internal power loss of AMPa will be $0.09^A \times 3^V = 0.27^W$. Compared with the corresponding power loss of $2.43^W$ in the circuit of Fig. 2, a drastic reduction in power loss is attained.

The additional power loss involved in the switching regulator SWP must also be considered. Power loss of the transistor Q, the resistor Rs, and capacitor Cs must be considered, because they are on the current path of the power feed circuit.

The transistor Q is operated by a rectangular wave signal so that it spends more time off than on, and therefore, power consumption of the transistor itself is very small. A small value for resistor Rs is desirable from the point of view of power loss, but the resistor Rs should be as large as possible to protect the transistor Q from the damage resulting from a large discharge current from capacitor Cs.

Too large a resistor Rs is not desirable as a DC power supply, in consideration of the internal DC resistance Z(d) of the battery feed circuit (the charge path for capacitor Cs) being selected to be 400 Ω or 440 Ω. From this consideration, resistor Rs should be less than 400 Ω, preferably 100 Ω is selected.

Moreover, determination of the resistor Rs should be made in consideration also of the capacitor Cs, referring to the time constant CsRs in correspondence to switching frequency f of the transistor Q. The switching frequency f is that of the rectangular wave input signal to transistor Q.

Determination of the size of capacitor Cs is made in consideration of the allowable ripple voltage Vr, which is determined by a noise requirement (−70 dBm in general) and ripple rejection characteristics of the battery feed circuit (20 dB in general). The calculated result is Vr=2.45 v.

The size of capacitor Cs can be determined by considering its charging path through AMPb, R1a, R1b, $R_L$ and AMPa as follows,

$$2Vr=(1-e^{-t/CsR})V_B,$$

$$R=R1a+R1b+R_L,$$

when $V_B=48$ v, Vr=2.45 v, and T=1/f,

$$e^{-T/CsR}=1-4.9/48\times10^{-3},$$

$$T/CsR=102\times10^{-6},$$

let R=200 Ω, then $Cs=T/20.4\times10^3$

If the switching frequency f is 256 khz, capacitor Cs must be more than 200 μF to meet the noise requirement.

A switching frequency 256 khz is selected so that the size of capacitor Cs is not so large, and at the same time, the frequency 256 khz is a multiple of the sampling frequency 8 khz used for PCM coding, 256 khz=32×8 khz, thereby avoiding interference with a PCM telephone signal.

As has been described above, it is possible to reduce the power loss of battery feed circuit drastically, by using the circuit embodying the present invention. It is possible to realise a small power consumption and small size battery feed circuit suitable to be provided by an IC, and also more large scale integrated circuits.

An embodiment of the present invention provides a battery feed circuit for a two wire telephone subscriber line which can be miniaturised in the form of an electronic integrated circuit (IC) without need for a transformer. The electronic battery feed circuit has 1st and 2nd operational amplifiers, output resistors, a DC voltage feedback loop, an AC signal feedback loop, and a switching power supply. The switching power supply controls power source voltage of the 1st operational amplifier, corresponding to length of the subscriber line loop and status of a telephone set in the loop. Low power consumption of the circuit is attained as follows:— most power loss occurs either in the amplifiers or in the output resistors. The loss in the output resistors is reduced by using small resistances and loss in the 2nd amplifier is reduced by using a small DC bias voltage. Loss in the 1st amplifier is reduced by reducing its power source voltage to a level lower than its output voltage, by means of the switching power supply. The switching power supply has a zener diode, two comparators and a switching transistor circuit.

**Claims**

1. A battery feed circuit, for supplying DC current to a two-wire subscriber line, including:

first (AMPa) and second (AMPb) amplifiers, respectively connected to first (A) and second (B) wires of the subscriber line, operable to provide the first wire (A) and the second wire (B) with DC voltage;

first (R1a) and second (R1b) output resistors, respectively connected between the outputs of the first (AMPa) and second (AMPb) amplifiers and the first (A) and second (B) wires, providing those amplifiers with respective output impedances for the respective wires; and

a DC voltage feedback loop (LPd), having an input connected to at least the said first wire (A), operable to provide a DC output voltage proportional to the DC voltage on the said first wire (A) and to feed that output voltage back to the first amplifier (AMPa);

characterised in that the battery feed circuit further includes:

a switching power supply (SWP) operable to compare a power source voltage (Vy) of the first amplifier (AMPa) with the output voltage of the DC voltage feedback loop, and to control the said power source voltage (Vy) to be less than the output voltage of the DC voltage feedback loop, the switching power supply comprising:

a zener diode (ZD), connected to an output terminal of the DC voltage feedback loop (LPd), operable to provide a DC reference voltage (Vz) based upon the output voltage of the DC voltage feedback loop;

a reference wave signal generator, generating a reference wave signal (W);

first comparator means (CMP1), operable to compare the voltage of the said power source voltage input terminal (Vy) of the first amplifier with the DC reference voltage (Vz), and to provide high voltage (V(b)) output or a low voltage (V(c)) output in dependence upon which of the compared voltages is higher;

second comparator means (CMP2), operable to compare said high voltage (V(b)) or said low voltage (V(c)), output from the first comparator means (CMP1), with the reference wave signal (W), and to provide a rectangular wave signal (Vh, V1), the waveform of which depends upon the results of such comparison; and

switching transistor circuit means (Q, Rc, Rs, Cs), comprising a transistor (Q), a capacitor (Cs), and first (Rc) and second (Rs) resistors, operable to provide a DC voltage by on/off switching of the collector current of the transistor (Q) in accordance with the rectangular wave signal (Vh, V1), supplied through the first resistor (Rc) to the transistor (Q), the capacitor (Cs) having a discharge path through the second resistor (Rs) and the transistor (Q), when the transistor (Q) is on, and a charge path including the first (AMPa) and second (AMPb) amplifiers when the transistor (Q) is off.

2. A battery feed circuit as claimed in claim 1, further comprising an AC feedback loop (LPa), operable differentially to amplify AC components of signals coming from the first (A) and second (B) wires, and to provide feedback to the first (AMPa) and second (AMPb) amplifiers respectively.

3. A battery feed circuit as claimed in claim 1 or 2, wherein each of the first (AMPa) and second (AMPb) amplifiers is a non-polarity inverting operational amplifier, having unity voltage gair infinite input impedance, and zero output impedance.

4. A battery feed circuit as claimed in claim 1, 2 or 3, wherein each of the first (R1a) and second (R1b) output resistors is the smallest possible consistent with AC signal phase difference between input and output of the resistor being negligibly small.

5. A battery feed circuit as claimed in claim 1, 2, 3 or 4, wherein the input of the second amplifier (AMPb) is biased by a small value of DC bias voltage, for example 3 volts.

6. A battery feed circuit as claimed in any preceding claim, wherein the zener voltage of the zener diode (ZD) is small, for example 3 volts.

7. A battery feed circuit as claimed in any preceding claim, wherein the second resistor (Rs) of the switching transistor means is smaller than the internal DC resistance of the said charge path.

8. A battery feed circuit as claimed in any preceding claim, wherein the reference wave signal (W) has a triangular or sawtooth waveform.

9. A battery feed circuit as claimed in any preceding claim, wherein the frequency of the reference wave signal (W) is a multiple of a sampling frequency used for PCM coding of a telephone signal.

10. A battery feed circuit as claimed in any preceding claim, wherein the frequency of the reference wave signal (W) is selected so that the value of the capacitor (Cs) of the switching transistor element means is as small as possible consistent with constrained limits on the time constant of the said charge path.

**Patentansprüche**

1. Batteriespeiseschaltung, zur Gleichstromversorgung für eine Zwei-Draht-Teilnehmerleitung, mit:

ersten (AMPa) und zweiten (AMPb) Verstärkern, die mit ersten (A) bzw. zweiten (B) Drähten der Teilnehmerleitung verbunden sind und betriebbar sind, um dem ersten Draht (A) und dem zweiten Draht (B) eine Gleichspannung zu liefern;

ersten (R1a) und zweiten (R1b) Ausgangswiderständen, die zwischen den Ausgängen der ersten (AMPa) bzw. zweiten (AMPb) Verstärkern und den ersten (A) bzw. zweiten (B) Drähten angeschlossen sind, und jene Verstärker mit jeweiligen Ausgangsimpedanzen für die entsprechenden Drähte bilden; und

einem Gleichspannungs-Rückführkreis (LPd), der einen Eingang hat, der mit wenigstens dem genannten ersten Draht (A) verbunden ist, der betriebbar ist, um eine Ausgangsgleichspannung zu liefern, die proportional zu der Gleichspannung des genannten ersten Drahtes (A) ist, und um die Ausgangsspannung an den ersten Verstärker (AMPa) zurückzuführen;

dadurch gekennzeichnet, daß der Batteriespeisekreis ferner umfaßt:

eine schaltende Energieversorgung (SWP), die betriebbar ist, um eine Energiequellenspannung (Vy) des ersten Verstärkers (AMPa) mit der Ausgangsspannung des Gleichspannungs-Rückführkreises zu vergleichen und die genannte Energiequellenspannung (Vy) zu steuern, damit sie kleiner als die Ausgangsspannung des Gleichspannungs-Rückführkreises ist, welche schaltende Energieversorgung umfaßt:

eine Zener-Diode (ZD), die mit einem Ausgangsanschluß des Gleichspannungs-Rückführkreises (LPd) verbunden ist, und betriebbar ist, um eine Referenz-Gleichspannung (Vz) zu liefern, basierend auf der Ausgangsspannung des Gleichspannungs-Rückführkreises;

einen Referenzwellensignal-Generator, der ein Referenzwellensignal (W) erzeugt;

erste Komparatoreinrichtungen (CMP1), die betriebbar sind, um die Spannung des genannten ersten Energiequellenspannungseingangsanschlusses (Vy) des ersten Verstärkers mit der Rererenz-Gleichspannung (Vz) zu vergleichen, und um einen hohen Spannungs-(V(b))-Ausgang oder einen niedrigen Spannungs-(V(c)-Ausgang zu liefern, in Abhängigkeit davon, welche der verglichenen Spannungen höher sind;

zweite Komparatoreinrichtungen (CMP2), die betriebbar sind, um die genannte hohe Spannung (V(b)) oder die genannte niedrige Spannung (V(c)), die von der ersten Komparatoreinrichtung (CMP1) abgegeben wird, mit dem Referenzwellensignal (W) zu vergleichen, und um ein rechtwinkliges Wellensignal (Vh, V1) zu liefern, dessen Wellenform von dem Ergebnis eines solchen Vergleiches abhängt; und

schaltende Transistorschaltungseinrichtungen (Q, Rc, Rs, Cs), die einen Transistor (Q), einen Kondensator (Cs) und erste (Rc) und zweite (Rs) Widerstände umfassen, die betriebbar sind, um eine Gleichspannung durch Ein/Aus-Schalten des Kollektorstromes des Transistors (Q) in Übereinstimmung mit dem rechtwinkligen Wellensignal (Vh, V1) zu liefern, welches durch den ersten Widerstand (Rc) an den Transistor (Q) geliefert wird, wobei der Kondensator (Cs) einen Entladungsweg durch den zweiten Widerstand (Rs) und den Transistor (Q) hat, wenn der Transistor (Q) ein ist, und einen Ladungsweg, der den ersten (AMPa) und zweiten (AMPb) Verstärker einschließt, wenn der Transistor (Q) aus ist.

2. Batteriespeisekreis nach Anspruch 1, ferner mit einem Wechselstrom-Rückführkreis (LPa), der differentiell betriebbar ist, um Wechselstromkomponenten des Signals zu verstärken, welche von dem ersten (A) und zweiten (B) Draht kommen, und um eine Rückkopplung an den ersten (AMPa) bzw. zweiten (AMPb) Verstärker zu liefern.

3. Batteriespeisekreis nach Anspruch 1 oder 2, bei dem sowohl der ersten (AMPa) als auch der zweite (AMPb) Verstärker ein nichtpolarer, invertierender Operationsverstärker ist, der eine Spannungsverstärkung 1:1, eine unbegrenzte Eingangsimpedanz und eine Ausgangsimpedanz null hat.

4. Batteriespeisekreis nach Anspruch 1, 2 oder 3, bei der sowohl der erste (R1a) als auch der zweite (R1b) Ausgangswiderstand der kleinstmögliche ist, der verträglich ist mit einer vernachlässigbar kleinen Wechselstromsignalphasendifferenz zwischen Eingang und Ausgang des Widerstandes.

5. Batteriespeisekreis nach Anspruch 1, 2, 3 oder 4, bei dem der Eingang des zweiten Verstärkers (AMPb) durch einen kleinen Wert einer Gleichstromvorspannung von z.B. 3 Volt vorgespannt ist.

6. Batteriespeisekreis nach einem der vorhergehenden Ansprüche, bei dem die Zener-Spannung der Zener-Diode (ZD) klein ist, z.B. 3 Volt.

7. Batteriespeisekreis nach einem der vorhergehenden Ansprüche, bei dem der zweite Widerstand (Rs) der Schalttransistoreinrichtung kleiner als der interne Gleichstromwiderstand des genannten Ladungsweges ist.

8. Batteriespeisekreis nach einem der vorhergehenden Ansprüche, bei dem das Referenzspannungssignal (W) eine dreieckige oder Sägezahn-Wellenform hat.

9. Batteriespeisekreis nach einem der vorhergehenden Ansprüche, bei dem die Frequenz des Referenzwellensignals (W) ein Vielfaches einer Abtastfrequenz ist, die zum PCM-Codieren eines Telefonsignals verwendet wird.

10. Batteriespeisekreis nach einem der vorhergehenden Ansprüche, bei dem die Frequenz des Referenzwellensignals (W) so ausgewählt ist, daß der Wert des Kondensators (Cs) der schaltenden Transistorschaltungseinrichtung möglichst klein ist, der verträglich ist mit den beschränkenden Grenzen der Zeitkonstanten des genannten Ladungswegs.

## Revendications

1. Circuit d'alimentation par batterie destiné à fournir un courant continu à une ligne d'abonné à deux fils, comportant:

un premier (AMPa) et un second (AMPb) amplificateur connectés respectivement à un premier (A) et un second (B) fil de la ligne d'abonné, ayant pour fonction de fournir au premier fil (A) et au second fil (B) une tension continue,

une première (R1a) et une seconde (R1b) résistance de sortie connectées respectivement entre les sorties du premier (AMPa) et du second (AMPb) amplificateur et le premier (A) et le second (B) fil, conférant à ces amplificateurs des impédances de sortie respectives pour les fils respectifs, et

une boucle de réaction de tension continue (LPd), dont une entrée est connectée à au moins ledit premier fil (A), ayant pour fonction de fournir une tension de sortie continue proportionnelle à la tension continue sur ledit premier fil (A) et de ramener cette tension de sortie au premier amplificateur (AMPa),

caractérisé en ce que le circuit d'alimentation par batterie comporte en outre:

une source d'alimentation à commutation (SWP) ayant pour fonction de comparer une tension de source d'alimentation (Vy) du premier amplificateur (AMPa) avec la tension de sortie de la boucle à réaction en tension continue et de commander ladite tension d'alimentation (Vy) pour qu'elle soit inférieure à la tension de sortie de la boucle de réaction en tension continue, la source d'alimentation à commutation comportant:

une diode Zener (ZD) connectée à une borne de sortie de la boucle de réaction en tension continue (LPd), ayant pour fonction de fournir une tension de référence continue (Vz) basée sur la tension de sortie de la boucle de réaction en tension continue,

un générateur de signal d'onde de référence produisant un signal d'onde de référence (W),

un premier comparateur (CLP1) ayant pour fonction de comparer la tension de ladite borne d'entrée de tension de source d'alimentation (Vy) du premier amplificateur avec la tension de référence continue (Vz) et de produire une sortie de tension haute (V(b)) ou une sortie de tension basse (V(c)) suivant celle des tensions comparées qui est la plus élevée,

un second comparateur (CMP2) ayant pour fonction de comparer ladite sortie de tension haute (V(b)) ou de tension basse (V(c)) du premier comparateur (CMP1) avec le signal d'onde de référence (W) et de produire un signal d'onde rectangulaire (Vh, V1) dont la forme d'onde dépend du résultat de cette comparaison, et un circuit à transistor de commutation (Q, Rc, Rs, Cs) comprenant un transistor (Q), un condensateur (Cs) et une première (Rc) et une seconde (Rs) résistance ayant pour fonction de produire une tension continue par commutation à la fermeture ou l'ouverture du courant de collecteur du transistor (Q) en fonction du signal d'onde rectangulaire (Vh, V1) fourni par la première résistance (Rc) au transistor (Q), le condensateur (Cs) ayant un circuit de décharge par la seconde résistance (Rs) et le transistor (Q) quand le transistor (Q) est débloqué et un circuit de charge comprenant le premier (AMPa) et le second (AMPb) amplificateur quand le transistor (Q) est bloqué.

2. Circuit d'alimentation par batterie selon la revendication 1, comprenant en outre une boucle de réaction en courant alternatif (LPa) ayant pour fonction d'amplifier différentiellement les composantes alternatives des signaux provenant du premier (A) et du second (B) fil, et d'introduire une réaction pour le premier (AMPa) et le second (AMPb) amplificateur respectivement.

3. Circuit d'alimentation par batterie selon la revendication 1 ou 2, dans lequel chacun du premier (AMPa) et du second (AMPb) amplificateur est un amplificateur opérationnel sans inversion depolarité, ayant un gain en tension unitaire, une impédance d'entrée infinie et une impédance de sortie nulle.

4. Circuit d'alimentation par batterie selon la revendication 1, 2 ou 3, dans lequel chacune de la première (R1a) et de la seconde (R1b) résistance de sortie est la plus petite possible cohérente avec une différence de phase de signal alternatif entre l'entrée et la sortie de la résistance, considérée comme négligeable.

5. Circuit d'alimentation par batterie selon la revendication 1, 2, 3 ou 4, dans lequel l'entrée du second amplificateur (AMPb) est polarisée par une faible valeur de tension de polarisation continue, par exemple 3 Volts.

6. Circuit d'alimentation par batterie selon l'une quelconque des revendications précédentes, dans lequel la tension Zener de la diode Zener (Zd) est faible, par exemple 3 Volts.

7. Circuit d'alimentation par batterie selon l'une quelconque des revendications précédentes, dans lequel la seconde résistance (Rs) du circuit à transistor de commutation est inférieure à la résistance interne en courant continu dudit circuit de charge.

8. Circuit d'alimentation par batterie selon l'une quelconque des revendications précédentes, dans lequel le signal d'onde de référence (W) a une forme d'onde triangulaire ou en dents de scie.

9. Circuit d'alimentation par batterie selon l'une quelconque des revendications précédentes, dans lequel la fréquence du signal d'onde de référence (W) est un multiple de la fréquence d'échantillonnage utilisée pour le codage par modulation d'impulsions codées d'un signal téléphonique.

10. Circuit d'alimentation par batterie selon l'une quelconque des revendications précédentes, dans lequel la fréquence du signal d'onde de référence (W) est choisie de manière que la valeur du condensateur (Cs) du circuit à transistor de commutation soit aussi faible que possible, cohérente avec les limites imposées sur la constante de temps dudit circuit de charge.

Fig. 1

Fig. 2

1

# Fig. 3

# F i g. 4

Subscriber Line Circuit

To Switching Network

Telephone Set

Subscriber Line (2 wire)

FIG. 5

0 116 767